(19) Europäisches Patentamt
European Patent Office
Office européen des brevets

(11) EP 0 996 589 B1

(12) **FASCICULE DE BREVET EUROPEEN**

(45) Date de publication et mention de la délivrance du brevet:
**05.12.2001 Bulletin 2001/49**

(21) Numéro de dépôt: **98935070.7**

(22) Date de dépôt: **01.07.1998**

(51) Int Cl.⁷: **C01B 35/14**

(86) Numéro de dépôt international:
**PCT/FR98/01403**

(87) Numéro de publication internationale:
**WO 99/01378 (14.01.1999 Gazette 1999/02)**

(54) **PREPARATION DE POLYBORAZYLENE MESOPHASIQUE, POLYBORAZYLENE MESOPHASIQUE, UTILISATION A TITRE DE PRECURSEUR DE BN**

VERFAHREN ZUR HERSTELLUNG VON POLYBORAZYLEN MESOPHASE, POLYBORAZYLEN MESOPHASE, IHRE VERWENDUNG ALS BN-VORLÄUFER

METHOD FOR PREPARING POLYBORAZYLENE MESOPHASE, POLYBORAZYLENE MESOPHASE, USE AS BN PRECURSOR

(84) Etats contractants désignés:
**CH DE FR GB LI NL**

(30) Priorité: **02.07.1997 FR 9708336**

(43) Date de publication de la demande:
**03.05.2000 Bulletin 2000/18**

(73) Titulaire: **Société Nationale d'Etude et de Construction de Moteurs d' Aviation**
**75015 Paris (FR)**

(72) Inventeurs:
- **PUJOL, Patrick**
  **F-17610 Chaniers (FR)**
- **BIROT, Marc**
  **F-33400 Talence (FR)**
- **PILLOT, Jean-Paul**
  **F-33610 Cestas (FR)**
- **BOURRAT, Xavier**
  **F-33200 Bordeaux (FR)**
- **MANFE, Olivier**
  **F-47200 Saint Pardoux du Breuil (FR)**
- **PAILLER, René**
  **F-33610 Cestas (FR)**
- **NASLAIN, Roger**
  **F-33600 Pessac (FR)**
- **DUNOGUES, Jacques**
  **F-33400 Talence (FR)**

(74) Mandataire: **Le Roux, Martine et al**
**Cabinet Beau de Loménie**
**158, rue de l'Université**
**75340 Paris Cédex 07 (FR)**

(56) Documents cités:
- **KIM, D. ET AL: "occurrence of liquid crystallinity in a borazine polymer" CHEMISTRY OF MATERIALS, vol. 6, 1994, pages 395-400, XP002058364 cité dans la demande**
- **COFER C. G. ET AL: "formation of an ordered boron nitride matrix for fiber reinforced composites" CERAMIC TRANSACTIONS, vol. 46, 1994, pages 189-197, XP002058365 cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 996 589 B1

Printed by Jouve, 75001 PARIS (FR)

## Description

La présente invention a pour objet :

- un procédé original de préparation de polyborazylène mésophasique. Ledit procédé est particulièrement intéressant en ce qu'il conduit à partir d'un polyborazylène adéquat, rapidement -quasi instantanément-, de façon reproductible et avec un bon rendement, à l'obtention d'un produit de qualité. Ledit procédé est par ailleurs d'une mise en oeuvre aisée ;
- du polyborazylène mésophasique, original, en ce qu'il est en présence d'un solvant particulier et/ou de par sa qualité ;
- l'utilisation, dudit polyborazylène de l'invention et/ou préparé selon l'invention, à titre de précurseur de nitrure de bore .

Depuis le milieu des années 70, l'apparition de nouveaux enjeux technologiques en sciences des matériaux a relancé l'intérêt des polymères organométalliques et de nombreux développements sont apparus. Ainsi a-t-il été rapporté la synthèse de polymères siliciés pouvant être mis en forme et servir de précurseurs de céramiques, de type SiC et $SiC/Si_3N_4$. Ces découvertes, liées à des besoins pratiques croissants en matière de mise en forme ainsi qu'en nouveaux matériaux pour des applications à haute température, ont encouragé de nouvelles recherches sur les polymères organométalliques et inorganiques.

Le nitrure de bore est à la base de céramiques commerciales. Il peut être aisément obtenu sous forme de poudre par pyrolyse de réactifs relativement peu coûteux. Malheureusement, il est très difficile d'obtenir ledit nitrure de bore sous forme de fibres ou de films à partir de poudres. Pour ce faire, la mise en oeuvre de polymères à base de bore et d'azote est apparue très attractive. Il a ainsi déjà été mis en oeuvre de tels polymères, obtenus par polycondensation de la borazine. En effet, la borazine ou "benzène minéral", facile à préparer, est un précurseur adéquat (il s'agit d'une molécule plane et réactive, susceptible de générer des molécules polycondensées, planes, constituées de cycles boraziniques). Ladite borazine répond à la formule chimique ci-après

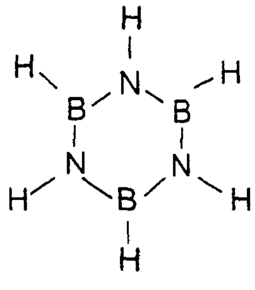

et est caractérisée par un rapport atomique B/N = 1.

Selon une première méthode, ladite borazine a été polymérisée en masse, sous dégazage régulier (le dihydrogène formé est évacué au fur et à mesure de sa formation) pour générer un polymère, le polyborazylène, qui peut notamment être déposé sous forme de film. Ledit polyborazylène, son obtention par cette méthode et ses utilisations à titre de précurseur de nitrure de bore ont notamment été décrits par

- FAZEN P.J. BECK J.S., LYNCH A.T., REMSEN E. E., SNEDDON L.G., dans "Thermally Induced Borazine Dehydropolymerization Reactions, Synthesis and Ceramic Conversion Reactions of a New High-yield Polymeric Precursor to Boron Nitride", Chem. Mater., 1990, 2, 96-97 ;
- FAZEN P.J., REMSEN E.E., BECK J.S., CARROLL P.J., McGHIE A.R., SNEDDON L.G., dans "Synthesis, Properties and Ceramic Conversion Reactions of Polyborazylene. A High-yield Polymeric Precursor to Boron Nitride", Chem. Mater., 1995, 7, 1942-1956.

L'utilisation particulière -sous forme de film- dudit polyborazylène a notamment été décrite par :

- CHAN V.Z-H., ROTHMAN J.B., PALLADINO P., SNEDDON L.G., COMPOSTO R.J., dans "Characterization of Boron Nitride Thin Films Prepared from a Polymer Precursor", J. Mater. Res., 1996, 11(2), 373-380 ;
- SNEDDON L.G., BECK J.S., FAZEN P.J., dans "Direct Thermal Synthesis in the Absence of Catalyst, and Ceramic Applications of Poly(borazylenes)", brevet US-A-5,502,142.

Selon une seconde méthode, ladite borazine a été polymérisée en masse, tout en laissant croître la pression dans le réacteur. Economy et al. ont montré que, dans de telles conditions, il était possible d'obtenir des oligomères possédant une température de "graphitisation" (processus d'organisation tridimensionnelle des feuillets d'hexagones BN, analogue à l'organisation du cristal de graphite) très basse (1500°C au lieu de 2500°C pour un nitrure de bore ordinaire).

Pour l'obtention, dans ces conditions, d'un polymère capable de développer une mésophase, Economy et al. ont, soit stocké l'oligomère obtenu - pendant plusieurs semaines, à une température entre 0 et 5°C, soit appliqué audit oligomère un recuit à 100°C sous 20 MPa de pression. (Des observations en microscopie optique en lumière polarisée montrent que l'application d'un traitement thermique jusqu'à 100°C a pour effet de désordonner le matériau. Toutefois, après retour à température ambiante, Economy et al. observent un retour vers un état anisotrope, mais cette réversibilité n'est pas totale. En effet, la diffraction des rayons X montre un pic correspondant aux plans (002), élargi après traitement

thermique à 100°C.)

L'une et l'autre des méthodes ci-dessus, qui ont donc conduit à du polyborazylène mésophasique, ont respectivement été décrites par :

- KIM D., ECONOMY J., dans "Occurrence of Liquid Crystallinity in a Borazine Polymer", Chem. Mater, 1994, 6, 395-400 (stockage à basse température) ; et par
- COFER C.G., KIM D., ECONOMY J., dans "Formation of an Ordered Boron Nitride Matrix for Fiber Reinforced Composites", Ceram. Trans. 1994, 46, 189-197 (recuit sous pression).

Toutefois, lesdites méthodes sont difficilement reproductibles, d'une mise en oeuvre relativement lourde et, en tout état de cause, ne génèrent qu'avec un rendement très faible, des mésophases polyboraziniques de médiocre qualité.

Or l'homme du métier n'ignore pas combien il serait intéressant de disposer aisément et quantitativement d'un polymère mésophasique suffisamment fluide, contenant déjà de larges domaines anisotropes, préfigurant la structure en feuillets de la céramique recherchée pour son utilisation à titre de précurseur de nitrure de bore, notamment hexagonal (BN-hex), en vue d'applications en tant que matrice et interphase, voire fibres....

La Demanderesse, confrontée à ce problème technique de la fourniture d'un tel précurseur de nitrure de bore -polyborazylène mésophasique- a développé un procédé original pour l'obtention dudit précurseur. Ledit procédé permet d'obtenir ledit précurseur dans des conditions très intéressantes et sous des formes originales.

Selon son premier objet, l'invention concerne donc une nouvelle méthode d'élaboration d'une mésophase précurseur de nitrure de bore, méthode qui conduit (quasi) instantanément et quantitativement, avec un rendement élevé au produit recherché. Ladite méthode consiste essentiellement en l'ajout d'un solvant à un polyborazylène. Elle présente l'avantage d'ajuster la viscosité tout en développant la structure de cristal liquide. Ceci facilite le contrôle de la rhéologie lors de la mise en forme de matériaux tels qu'un film interfacial pour les matériaux composites.

Plus précisément, on propose, selon l'invention, un procédé de préparation de polyborazylène mésophasique qui comprend deux étapes essentielles. Selon la première desdites étapes, on prépare du polyborazylène par polycondensation de borazine en réacteur fermé. Cette synthèse du polyborazylène, connue en soi depuis au moins 1959 (D.T. Haworth, L.F. Hohnstedt, J.A.C.S., 1959, vol. 82, 3860) est mise en oeuvre selon la technique de l'art antérieur rappelée ci-dessus. Selon la seconde desdites étapes, de façon caractéristique, pour l'obtention quasi instantanée de la mésophase recherchée, on ajoute audit polyborazylène obtenu par polycondensation en réacteur fermé, un (additif approprié appelé) solvant choisi parmi les solvants aromatiques, les solvants boraziniques et leurs mélanges.

De manière tout à fait surprenante, la Demanderesse a constaté qu'un polyborazylène préparé en réacteur fermé (donc, notamment sous la pression du dihydrogène dégagé) conduit instantanément, sous l'effet d'un solvant approprié, à la formation d'une mésophase et ce, avec des rendements élevés et de façon reproductible.

Aux techniques de l'art antérieur, de mûrissement lent à basse température ou de recuit sous pression, qui ne conduisent qu'avec un faible rendement, de façon non reproductible, à un polyborazylène mésophasique de faible qualité, on substitue avantageusement, dans le cadre du procédé de l'invention, la simple intervention d'un solvant convenable. Une telle substitution est avantageuse, de par sa facilité de mise en oeuvre, son haut rendement, sa reproductibilité et la qualité du produit obtenu.

Le solvant intervenant qui dissout le polyborazylène ou qui est lui-même dissous dans ledit polyborazylène favorise l'organisation des molécules polycondensées. Son intervention, en plus ou moins grande quantité (des précisions sont données à ce propos plus avant dans le présent texte) permet d'obtenir la mésophase, plus ou moins fluide.

Quelle que soit la quantité de solvant ajoutée, dans le but notamment de régler la viscosité de la mésophase obtenue, voire de débarrasser ladite mésophase dudit solvant, on peut prévoir, dans le cadre du procédé de l'invention, une troisième étape de traitement de ladite mésophase pour en éliminer, en totalité ou en partie, ledit solvant. A cette fin, l'homme du métier saura mettre en oeuvre les techniques adéquates. On peut citer, de façon non exhaustive, les techniques d'évaporation, notamment sous vide.

On en revient maintenant à la première étape du procédé de l'invention : la polycondensation de la borazine en réacteur fermé. De façon classique, ladite polycondensation est généralement mise en oeuvre à une température comprise entre 50 et 120°C, avantageusement à une température comprise entre 60 et 80°C. Elle est évidemment mise en oeuvre sous atmosphère inerte, anhydre. Elle peut notamment être mise en oeuvre sous atmosphère d'azote ou d'argon. La pression initiale, à l'intérieur du réacteur, est, de façon classique, la pression atmosphérique. Dans le cadre de l'invention, le procédé a également été mis en oeuvre avec des pressions initiales contrôlées de gaz inerte, supérieures à la pression atmosphérique, notamment comprise entre $10.10^5$ et $200.\ 10^5$ Pa. Ainsi, la polycondensation, première étape du procédé revendiqué, est-elle généralement mise en oeuvre sous une pression initiale de gaz inerte comprise entre la pression atmosphérique et $200.10^5$ Pa. Il n'est pas exclu du cadre de l'invention de mettre en oeuvre ladite première étape sous une pression totale ou partielle de dihydrogène (ledit dihydrogène constituant présentement un gaz inerte chimiquement).

A toutes fins utiles et de façon nullement limitative, la Demanderesse est en mesure d'indiquer ici que le polyborazylène, obtenu à l'issue de la première étape de polycondensation mise en oeuvre en réacteur fermé, présente généralement les caractéristiques ci-après :

$\bar{M}_n \approx$ 600-1400 (masse moléculaire en nombre)
$\bar{M}_w \approx$ 1600-5700 (masse moléculaire en poids)
$I_p \approx$ 2-6 (indice de polymolécularité) ;

caractéristiques déterminées en chromatographie d'exclusion stérique (S.E.C.) avec un étalonnage polystyrène. (On peut indiquer plus précisément que les analyses des masses moléculaires ont été réalisées à l'aide d'un appareil Waters 510 équipé d'un détecteur réfractométrique différentiel Waters 410. Le calcul des différentes masses moléculaires est basé sur une calibration obtenue à partir d'étalons monodisperses de polystyrène dans les conditions suivantes : colonne TSK GMHXL, porosité 1500 à $10^7$ Å ; éluant : THF, débit : 1 ml/min, durée : 15 min.)

Ledit polyborazylène, obtenu à l'issue de la première étape de polycondensation en réacteur fermé est, de façon caractéristique, dans le cadre du procédé de l'invention, mis en présence d'un additif approprié appelé solvant. Ledit solvant est généralement ajouté audit polyborazylène ramené à la température ambiante.

Ledit solvant est choisi parmi :

- les solvants aromatiques, tels le benzène, le toluène, les ortho-, méta-, paraxylènes...
- les solvants boraziniques, tels la borazine et ses dérivés. Lesdits dérivés englobent notamment les N-alkyl et/ou B-alkylborazines (telles la N-triméthylborazine et la N-triisopropylborazine); le terme alkyle correspondant généralement à des groupements ($C_1$-$C_8$) alkyles, linéaires ou ramifiés ; dans la mesure où ils sont liquides dans les conditions de mise en oeuvre. Lesdits dérivés ne sont pas substitués par des fonctions susceptibles de réagir ;
- les mélanges desdits solvants.

Selon une variante avantageuse, le solvant intervenant est choisi parmi la borazine, le benzène, le toluène et les xylènes.

Ledit solvant, quelle que soit sa nature, intervient bien évidemment sec et à un degré de pureté adéquat.

De la même façon, il intervient, bien évidemment, en une quantité adéquate, raisonnable. Ledit solvant est généralement ajouté dans un rapport massique solvant/polyborazylène inférieur à 10 (généralement supérieur ou égal à 0,1), avantageusement compris entre 0,2 et 5. Il convient en fait d'ajouter ledit solvant :

- en une quantité minimale, pour l'obtention de l'effet escompté : orientation des molécules mésogènes et réglage de la viscosité ou fluidité du mélange ;
- en une quantité raisonnable, pour éviter de détruire la mésophase, lorsqu'on se trouve en solution trop diluée.

On a déjà indiqué que ledit solvant pouvait être ajouté en une certaine quantité au cours de la seconde étape du procédé de l'invention et éliminé, en totalité ou en partie seulement, au cours d'une troisième étape.

Il est opportun d'ajuster la quantité de solvant ajouté à l'utilisation finale visée pour la mésophase préparée.

Ainsi, la Demanderesse préconise-t-elle :

- d'ajouter ledit solvant dans un rapport massique solvant/polyborazylène supérieur à 1 ; notamment, pour la préparation d'un polyborazylène mésophasique précurseur d'interphases (interphases fibres/matrices, dans la structure d'un matériau composite) à base de nitrure de bore ;
- d'ajouter ledit solvant dans un rapport massique solvant/polyborazylène égal ou inférieur à 1 ; notamment pour la préparation d'un polyborazylène mésophasique précurseur de fibres, de matrices, de matériaux, à base de nitrure de bore.

L'intérêt du procédé de l'invention n'aura pas échappé à l'homme du métier.

Ledit procédé conduit, comme déjà précisé, à un polyborazylène mésophasique original, qui constitue le second objet de la présente invention.

Certes, selon l'art antérieur, Economy et al. ont préparé du polyborazylène mésophasique mais ledit polyborazylène mésophasique ne se trouvait ni en présence d'un solvant du type de ceux intervenant dans le procédé de l'invention ni sous une forme très "pure".

Ainsi, le second objet de la présente invention concerne-t-il :

- du polyborazylène mésophasique en présence d'un solvant choisi parmi les solvants aromatiques, boraziniques et leurs mélanges. Toutes les précisions, en ce qui concerne la nature exacte et les quantités d'intervention dudit solvant, fournies en référence au procédé de l'invention décrit ci-dessus, peuvent être reprises ici. On rappelle que ledit polyborazylène de l'invention se trouve en solution dans ledit solvant ou qu'inversement ledit solvant est en solution dans ledit polyborazylène ;
- du polyborazylène mésophasique, en présence ou non d'un tel solvant, caractérisé, en microscopie optique, par un fort taux d'anisotropie. De façon caractéristique, le polyborazylène mésophasique de

l'invention présente, en microscopie optique, un taux d'anisotropie supérieur à 50%, avantageusement supérieur à 80% et pouvant atteindre environ 100%. La Demanderesse revendique *per se* ledit polyborazylène mésophasique, qui n'a jamais été obtenu selon l'art antérieur. Elle a décrit ci-dessus un procédé d'élaboration dudit produit, procédé basé sur l'action d'un solvant spécifique sur un polyborazylène approprié.

L'intérêt d'un tel produit a été rappelé dans l'introduction du présent texte. Il constitue un précurseur de choix pour du nitrure de bore, notamment hexagonal. Ainsi, le troisième objet de la présente invention concerne-t-il l'utilisation d'un polyborazylène de l'invention, présentant les caractéristiques énoncées ci-dessus (présence du solvant particulier et/ou fort taux d'anisotropie en microscopie optique) et/ou celle d'un polyborazylène préparé selon le procédé de l'invention (comprenant principalement l'addition d'un solvant particulier à un polyborazylène obtenu par polycondensation de borazine en réacteur fermé) à titre de précurseur de nitrure de bore, notamment hexagonal.

L'homme du métier maîtrise parfaitement le(s) traitement(s) thermique(s) à mettre en oeuvre pour obtenir la céramisation adéquate.

Le nitrure de bore obtenu à partir du polyborazylène mésophasique de l'invention est un nitrure de bore généralement de type hexagonal. Il est permis de penser qu'un nitrure de bore non hexagonal puisse être obtenu directement à partir du polyborazylène mésophasique de l'invention, mais il peut assurément l'être par transformation, par des voies familières à l'homme du métier, du nitrure de bore hexagonal obtenu directement à partir du polyborazylène mésophasique de l'invention.

On précise ici de façon nullement limitative que le polyborazylène mésophasique de l'invention (et/ou préparé selon l'invention ) peut notamment être utilisé, de manière générale :

- pour élaborer des revêtements à base de nitrure de bore;
- pour élaborer des matériaux, et notamment des fibres, à base de nitrure de bore ;
  et plus particulièrement, dans le contexte de la préparation des matériaux composites :
- pour élaborer des fibres et/ou des interphases à la surface de fibres et/ou des matrices.

Le polyborazylène mésophasique de l'invention convient en fait pour préparer tout type de produit à base de nitrure de bore, notamment de type hexagonal. Il est particulièrement adapté de par ses propriétés filmogènes pour élaborer des interphases et/ou revêtements. Ceux-ci se caractérisent par une excellente homogénéité.

L'homme du métier maîtrise parfaitement les traitements thermiques à mettre en oeuvre pour obtenir la céramisation adéquate.

L'invention est maintenant illustrée par les figures annexées et les exemples ci-après.

Lesdites figures correspondent respectivement :

- figure 1, à un cliché de microscopie optique entre Nicols croisés d'une mésophase de l'invention, obtenue en présence d'un solvant borazinique (lame d'onde), selon le protocole de l'exemple 1 ;
- figure 2, à un cliché de microscopie optique entre Nicols croisés d'un polyborazylène vieilli selon l'art antérieur (lame d'onde), plus précisément selon le protocole de l'exemple comparatif 1';
- figure 3, à un cliché de microscopie optique entre Nicols croisés d'une mésophase de l'invention, obtenue en présence d'un solvant borazinique (lame d'onde), selon le protocole de l'exemple 2 ;
- figure 4, à un cliché de microscopie optique entre Nicols croisés d'une mésophase de l'invention, obtenue en présence d'un solvant aromatique (lame d'onde), selon le protocole de l'exemple 3 ;
- figure 5, à des images en fond clair d'une mésophase de l'invention fraîchement préparée (selon l'exemple 1) incluant, en encart, le spectre de diffraction électronique (microscopie électronique en transmission à haute résolution) ;
- figure 6, à une image en fond noir ét à des images en franges de réseau (encart) d'une mésophase de l'invention (préparée selon l'exemple 1), d'où le solvant a été, au moins partiellement, éliminé et stockée à l'air (microscopie électronique en transmission à haute résolution) ;
- figure 7, à un spectre de pertes d'énergie d'une mésophase de l'invention fraîchement préparée (selon l'exemple 1) et d'où le solvant a été, au moins partiellement, éliminé;
- figure 8, à un spectre des faibles pertes d'énergie d'une mésophase de l'invention fraîchement préparée (selon l'exemple 1) ;
- figure 9, à un cliché de microscopie électronique à balayage d'une mèche de carbone enrobée d'un film ex-mésophase de l'invention (mésophase préparée selon l'exemple 2) ;
- figure 10, à une image en franges de réseau (cliché de microscopie électronique en transmission à haute résolution) de la texture d'une fibre de nitrure de bore obtenue à partir d'une mésophase de l'invention (mésophase préparée selon l'exemple 2).

Lesdites figures sont commentées dans la partie exemples ci-après. On précise toutefois, d'ores et déjà, en référence respectivement, aux figures 1 à 4 (microscopie optique) et aux figures 5 et 6 (microscopie électronique), ce qui suit.

Les caractérisations des mésophases de l'invention par microscopie optique sont effectuées sur un

microscope Olympus équipé d'une platine chauffante (Leitz) sous courant d'un gaz inerte (argon). La mésophase est déposée directement sur le porte-échantillon en quartz, ce qui permet l'observation en lumière transmise, polarisée et analysée. On utilise une lame d'onde $\lambda$ = 530 nm. Les clichés sont réalisés sur des films Kodacolor Gold 100 ASA.

Les préparations pour la microscopie électronique ont été réalisées en boîte à gants sous azote avec un taux d'humidité très réduit. Le polyborazylène dans la borazine est simplement déposé sur des grilles de cuivre recouvertes d'un film de carbone à trous. Les préparations sont ensuite portées rapidement sous vide primaire dans le sas de prépompage avant d'être introduites dans le microscope sous vide ionique (préparations fraîches). Certaines de ces préparations stockées à l'air sans précautions particulières ont de nouveau été observées plusieurs jours après. Les préparations sont prises en masse, elles contiennent des bulles et sont stables sous le faisceau.

Les observations sont faites avec un appareil Philips CM30 ST aligné à 300 keV en "low dose". Les pertes d'énergies (déterminées par la technique EELS, Electron Energy Loss Spectroscopy) ont été mesurées avec le spectromètre Gatan 666-3K et le microscope aligné à 100 keV en mode image de manière à augmenter la résolution en énergie.

EXEMPLE 1

Synthèse du polyborazylène

La réaction de déshydrogénocondensation est effectuée dans un autoclave en acier inoxydable de volume V = 12 ml. La charge de borazine (8,5 ml ; 7,4 g ; 0,092 mol) placée dans ledit autoclave, sous atmosphère inerte ($P_{O_{N_2}}$ = $10^5$ Pa), correspond environ aux trois quarts du volume de celui-ci. Ledit autoclave est ensuite placé dans une enceinte dont la température est maintenue à $\theta$ = 70°C, pendant 48 h. Dans ces conditions, la borazine se polycondense pour générer un polymère de faible masse moléculaire. La pression, à l'intérieur de l'autoclave, due principalement à l'élimination de dihydrogène, est mesurée après retour à température ambiante. Cette pression est de $360.10^5$ Pa. La masse de polyborazylène récupérée est de 6 g (rendement = 80 %).

L'analyse par RMN $^{11}B$ en mode découplé dudit polyborazylène révèle un large pic centré à $\delta$ = +30 ppm, comprenant des épaulements caractéristiques de cycles boraziniques. Ladite analyse est réalisée avec un spectromètre Brücker DPX 400 fonctionnant à 128 MHz, avec des tubes de 10 mm de diamètre.

Préparation de la mésophase

La mésophase est obtenue en mélangeant une quantité m = 110 mg de polyborazylène ainsi préparé, avec une quantité m = 130 mg de borazine. La solution obtenue est fluide et homogène. Elle présente un aspect laiteux et possède toutes les caractéristiques d'un cristal liquide en microscopie optique.

Caractérisation de ladite mésophase

**• En microscopie optique**

L'observation en microscopie optique en lumière polarisée de la mésophase obtenue avec la borazine montre l'existence de larges domaines isoclines jaunes ou bleus, orientés à 45° du polariseur ou de l'analyseur (figure 1).

Si la lumière polarisée traverse un milieu cristallisé biréfringent, les rayons se propagent alors suivant deux directions orthogonales avec des vitesses différentes suivant les indices de ce milieu (biréfringence). Dans l'analyseur, ces deux faisceaux se recombinent en créant une couleur d'interférence caractéristique du déphasage des deux faisceaux. Dans le cas présent, si la goutte de polyborazylène diluée dans le solvant était isotrope, elle se comporterait comme tous les liquides (ou les milieux isotropes). Il y aurait extinction complète entre polariseur et analyseur. Le liquide apparaîtrait noir. Par contre, si les molécules dans ce liquide possèdent un ordre d'orientation à grande distance ou cristal liquide, ce qui est le cas, la lumière se comporte comme dans un cristal et le liquide prend des couleurs d'interférence caractéristiques. Lorsque la biréfringence est faible, on utilise, dans le trajet optique, une lame d'onde qui impose un déphasage connu, égal à une fois la longueur d'onde. L'addition ou la soustraction des déphasages fait apparaître les couleurs jaune orangé et bleue dans les clichés, qui prouvent l'existence de la mésophase.

Le cliché de la figure 1 montre que l'ajout de borazine conduit bien à la formation de cristaux liquides. De plus, lorsqu'on fait tourner la platine, on observe une extinction roulante caractéristique (courbure des contours d'extinction), ainsi que l'existence de points singuliers, fixes, qui témoignent de la présence de disinclinaisons (défauts de rotation typiques des cristaux liquides). L'ajout d'une faible quantité de solvant permet donc instantanément au polymère de se réorganiser, de sorte que les molécules contenant des noyaux boraziniques plans s'empilent et s'alignent avec un ordre à grande distance visible en microscopie optique.

**• par microscopie électronique en transmission**

La mésophase est simplement déposée sur des grilles de cuivre recouvertes d'un film de carbone à trous. Les préparations sont ensuite portées rapidement sous vide primaire dans le sas de prépompage avant d'être introduites dans le microscope sous vide ionique.

L'analyse en microscopie électronique à transmission montre en diffraction l'existence d'un ordre bidimensionnel lié aux feuillets de BN hexagonal avec apparition de bandes élargies (10) et (11), diffraction des rangées [100] et [110] d'atomes (figure 5). Lors de la préparation, les molécules adoptent une orientation parallèle au substrat (film de carbone), rendant impossible la mise en évidence des raies de diffraction des plans (001). Toutefois, l'élargissement des bandes hk de diffraction permet de calculer la taille de ces domaines diffractants (extension de feuillets). Ainsi, on a pu mesurer $L_a$ = 1,2 nm, ce qui pourrait correspondre à des structures contenant de l'ordre de 15 à 20 cycles condensés.

Après plusieurs jours, la préparation a changé de forme (formation de bulles). La prise en masse du cristal liquide permet de faire les observations qui étaient inaccessibles sur la préparation fraîche (instable sous le faisceau).

Les observations en fond noir (figure 6) sur les parois des bulles permettent de mettre en contraste de nombreuses unités structurales de base (USB) de petite taille qui appartiennent à un même domaine isocline. L'imagerie en franges de réseau permet de visualiser ces domaines cohérents. Ils sont constitués par des empilements de grosses molécules comme le montre la figure 6 en encart.

**• En perte d'énergie (EELS)**

Les même préparations que précédemment ont été caractérisées en perte d'énergie des électrons dans le microscope électronique. Cette technique permet de mettre en évidence (et de quantifier) les éléments présents. Par ailleurs, les structures fines aux seuils des pics d'absorption (ELNES : Electron Loss Near Edge Structure) permettent de différencier les liaisons (e.g. BN cubique ou BN hexagonal).

La figure 7 montre le spectre obtenu sur la mésophase d'où le solvant a été partiellement éliminé (vide ionique du microscope) : on distingue les seuils K du bore à 188 eV et de l'azote à 401 eV. Les structures fines présentes aux seuils sont caractéristiques de BN hexagonal. Ceci a été démontré par comparaison dudit spectre avec, d'une part, celui d'un BN cubique commercial (fourni par la Société DE BEERS) et, d'autre part, celui d'un BN-hex du commerce (fourni par la Société PROLABO). Ces structures fines sont dues aux différentes transitions électroniques possibles des électrons. Elles sont caractéristiques de l'environnement chimique des atomes. Cette analyse permet ainsi de quantifier les concentrations relatives des éléments. Ainsi, dans le cas d'un produit fraîchement préparé, le rapport N/B est proche de 1. Lorsque le polymère a été partiellement hydrolysé, les structures des raies B et N s'élargissent. De plus, on note l'apparition d'un large pic à E = 532 eV dû à la présence d'oxygène.

Aux faibles énergies, on observe le pic des plasmons qui correspond à l'excitation collective des électrons de valence (figure 8). Entre le pic sans perte et le pic des plasmons, on observe un deuxième pic correspondant aux excitations interbandes à E = 8 eV. Ces transitions notées $\pi \rightarrow \pi^*$ sont caractéristiques de l'aromaticité du produit.

<u>EXEMPLE 1'</u> (comparatif)

<u>Synthèse du polyborazylène</u>

Ladite synthèse est mise en oeuvre dans les conditions précisées à l'exemple 1.

<u>Vieillissement (maturation) dudit polyborazylène</u>

Le polymère obtenu est conservé vers $\theta = 0°C$ pendant environ 8 mois.

A l'issue de ce stockage à basse température, on a cherché à caractériser la "mésophase" obtenue.

<u>Caractérisation en microscopie optique de la mésophase</u>

La mésophase obtenue à partir de polyborazylène selon l'art antérieur ne conduit pas, même après solubilisation, au même type de mésophase que celles de l'invention. Ceci est clairement mis en évidence sur le cliché de la figure 2. On y observe de petites cristallites anisotropes. Les lentes réactions de condensation ont permis la croissance des domaines anisotropes et la formation desdites petites cristallites insolubles. De plus, les polymères les plus condensés tendent à former des monocristaux, insolubles même à des taux de dilution élevée.

<u>EXEMPLE 2</u>

<u>Synthèse du polyborazylène</u>

La réaction de déshydrogénocondensation est menée dans les mêmes conditions que celles de l'exemple 1, mais avec une pression initiale de diazote de $60.10^5$ Pa($P^o_{N_2}$ = $60.10^5$ Pa).

<u>Préparation de la mésophase</u>

Une masse m = 110 mg de polyborazylène est mélangée à une masse m = 100 mg de borazine. La solution laiteuse obtenue est très fluide.

<u>Caractérisation de ladite mésophase en microscopie optique</u>

La microscopie optique montre (voir la figure 3), comme dans le cadre de l'exemple 1 (et de la figure 1), des couleurs d'interférence prouvant la formation d'un cristal liquide. Dans ce cas, on remarque que la mésophase obtenue possède des domaines anisotropes de tailles plus grandes. Cependant, les contours restent irréguliers.

EXEMPLE 3

Synthèse du polyborazylène

Le polyborazylène est préparé dans les conditions de l'exemple 2.

Préparation de la mésophase

Une masse m = 100 mg de polyborazylène est mélangée à une masse m = 90 mg de toluène. Ledit toluène a été préalablement séché sur sodium ou par distillation azéotropique puis distillé sur sodium. La solution laiteuse obtenue est très fluide.

Caractérisation de ladite mésophase

La mésophase obtenue (solution laiteuse) présente un taux d'anisotropie supérieur à 80 % au microscope en lumière polarisée. La microscopie optique (figure 4) montre dans ce cas de larges domaines anisotropes aux contours plus réguliers.

EXEMPLE 4

Le polyborazylène et la mésophase sont obtenus, successivement, dans les conditions de l'exemple 2. Ladite mésophase est utilisée afin d'enrober une mèche de carbone, par la technique dite de "dip-coating", en vue de former un revêtement qui peut jouer le rôle d'interphase dans un composite, à renfort de carbone et matrice céramique par exemple.

Après l'enrobage, le dépôt est traité à une température d'environ 60°C pendant 24 heures afin de le rendre infusible. Ce traitement est suivi d'une pyrolyse à 1 000°C, en atmosphère inerte (argon), pendant 12 heures.

La mésophase exhibe un parfait comportement filmogène. Le film obtenu est en effet homogène dans son épaisseur et sur toute la longueur de la mèche revêtue. Ceci apparaît clairement à la considération du cliché (d'un des filaments de la mèche) en microscopie électronique à balayage de la figure 9.

EXEMPLE 5

Le polyborazylène et la mésophase sont obtenus, successivement, dans les conditions de l'exemple 2. La mésophase est utilisée afin d'enrober une mèche de fibres de carbure de silicium, par la technique dite de "dip-coating", en vue de former un revêtement capable de jour le rôle d'interphase dans un composite.

Le dépôt est ensuite traité à une température d'environ 60°C pendant 24 heures afin de le rendre infusible. Ce traitement est suivi d'une pyrolyse à 1 000°C en atmosphère inerte (argon) pendant 12 heures. Du carbure de silicium est alors déposé par dépôt chimique en phase vapeur, à partir d'un précurseur gazeux, constitué d'un mélange de méthyltrichlorosilane (MTS) et d'hydrogène ($H_2$), dans un rapport molaire : $\alpha = \frac{H_2}{MTS} = 6$, à une température de 950°C et sous une pression de 3 kPa, afin d'obtenir un minicomposite unidirectionnel possédant une fraction volumique de fibres de 40 %. Le matériau est testé mécaniquement en traction et caractérisé sur le plan structural et microstructural.

Le matériau comportant une interphase, issue du précurseur de polyborazylène mésophasique de l'invention, présente un comportement non fragile et, notamment, un faciès de rupture caractérisé par un déchaussement important des fibres ("pull-out"). Ce comportement est rendu possible par le présence de l'interphase qui joue le rôle de déviateur des fissures matricielles. Ladite interphase constituée par le matériau issu du polyborazylène mésophasique est à l'origine du bon comportement mécanique du composite.

EXEMPLE 6

Le polyborazylène et la mésophase sont obtenus, successivement, dans les conditions de l'exemple 2. La mésophase est utilisée comme précurseur de fibres de nitrure de bore. Dans ce cas, la quantité de solvant qui sert à obtenir l'état mésomorphe est ajustée de manière à obtenir la viscosité adéquate. Lorsque la mésophase atteint la viscosité désirée, on procède à un filage de type "dry-spinning" à une température de l'ordre de 70°C.

L'analyse des fibres crues par la technique EELS (en perte d'énergie), montre que leur composition est très proche de la stoechiométrie : B/N (atom.) =1.

Les fibres sont ensuite stabilisées par voie thermique. Elles sont enfin pyrolysées successivement à 1 000°C pendant 12 heures, puis à 1 250°C pendant 2 heures, sous argon. Un cliché obtenu en microscopie électronique à transmission montre à quel point l'ajout de solvant permet de bien régler la viscosité puisque des diamètres de fibres de moins de 3 µm ont été facilement obtenus. La structure et la composition chimique des fibres confirment la formation d'un nitrure de bore quasi stoechiométrique. A 1 250°C, ce nitrure de bore montre un état de "graphitisation" déjà avancé. L'analyse quantitative des clichés de diffraction électronique montre le développement de l'ordre tridimensionnel. Les cristallites de nitrure de bore sont constituées d'une dizaine de couches espacées d'une distance de l'ordre de 0,336 nm en moyenne (Fig. 10).

**Revendications**

1. Procédé de préparation de polyborazylène mésophasique, comprenant l'obtention de polyborazylène par polycondensation de borazine en réacteur fermé et **caractérisé en ce qu'**il comprend en outre, pour l'obtention quasi instantanée d'une mésophase, l'addition d'un solvant choisi parmi les solvants aromatiques, boraziniques et leurs mélanges, audit polyborazylène obtenu par polycondensation.

**2.** Procédé selon la revendication 1, **caractérisé en ce que** ladite mésophase est ultérieurement traitée pour en éliminer, en totalité ou en partie, ledit solvant.

**3.** Procédé selon l'une des revendications 1 ou 2, **caractérisé en ce que** ladite polycondensation est mise en oeuvre à une température comprise entre 50 et 120°C, avantageusement à une température comprise entre 60 et 80°C.

**4.** Procédé selon l'une quelconque des revendications 1 à 3, **caractérisé en ce que** ladite polycondensation est mise en oeuvre sous une pression initiale de gaz inerte comprise entre la pression atmosphérique et $200.10^5$ Pa.

**5.** Procédé selon l'une quelconque des revendications 1 à 4, **caractérisé en ce que** ledit solvant est choisi parmi la borazine, le benzène, le toluène et les xylènes.

**6.** Procédé selon l'une quelconque des revendications 1 à 5, **caractérisé en ce que** ledit solvant est ajouté dans un rapport massique solvant/polyborazylène inférieur à 10, avantageusement compris entre 0,2 et 5.

**7.** Procédé selon la revendication 6, **caractérisé en ce que** ledit solvant est ajouté dans un rapport massique solvant/polyborazylène supérieur à 1.

**8.** Procédé selon la revendication 6, **caractérisé en ce que** ledit solvant est ajouté dans un rapport massique solvant/polyborazylène inférieur ou égal à 1.

**9.** Polyborazylène mésophasique en présence d'un solvant choisi parmi les solvants aromatiques, boraziniques et leurs mélanges.

**10.** Polyborazylène mésophasique présentant, en microscopie optique, un taux d'anisotropie supérieur à 50%, avantageusement supérieur à 80%.

**11.** Polyborazylène mésophasique présentant, en microscopie optique, un taux d'anisotropie voisin de ou égal à 100%.

**12.** Utilisation, d'un polyborazylène préparé selon l'une quelconque des revendications 1 à 8 et/ou d'un polyborazylène selon l'une quelconque des revendications 9 à 11, à titre de précurseur de nitrure de bore, notamment de nitrure de bore de type hexagonal.

**13.** Utilisation d'un polyborazylène, selon la revendication 12, pour l'élaboration :

- de matériaux, notamment de fibres, à base de nitrure de bore ;
- de revêtements à base de nitrure de bore ;
- de fibres et/ou d'interphases à la surface de fibres et/ou de matrices,

dans le contexte de la préparation de matériaux composites.

**Claims**

**1.** A process for the preparation of mesophasic polyborazylene, comprising the preparation of polyborazylene by the polycondensation of borazine in a closed reactor, **characterized in that** it also comprises, for the virtually instantaneous preparation of a mesophase, the addition, to said polyborazylene obtained by polycondensation, of a solvent selected from aromatic solvents, borazine solvents and mixtures thereof.

**2.** The process according to claim 1, **characterized in that** said mesophase is subsequently treated so as to remove all or part of said solvent therefrom.

**3.** The process according to one of claims 1 or 2, **characterized in that** said polycondensation is carried out at a temperature of between 50 and 120°C, advantageously at a temperature of between 60 and 80°C.

**4.** The process according to any one of claims 1 to 3, **characterized in that** said polycondensation is carried out under an initial inert gas pressure of between atmospheric pressure and $200.10^5$ Pa.

**5.** The process according to any one of claims 1 to 4, **characterized in that** said solvent is selected from borazine, benzene, toluene and xylenes.

**6.** The process according to any one of claims 1 to 5, **characterized in that** said solvent is added in a solvent/polyborazylene weight ratio below 10, advantageously of between 0.2 and 5.

**7.** The process according to claim 6, **characterized in that** said solvent is added in a solvent/polyborazylene weight ratio greater than 1.

**8.** The process according to claim 6, **characterized in that** said solvent is added in a solvent/polyborazylene weight ratio less than or equal to 1.

**9.** Mesophasic polyborazylene in the presence of a

solvent selected from aromatic solvents, borazine solvents and mixtures thereof.

**10.** Mesophasic polyborazylene having a degree of anisotropy greater than 50%, advantageously greater than 80%, in light microscopy.

**11.** Mesophasic polyborazylene having a degree of anisotropy approximating to or equal to 100% in light microscopy.

**12.** Use of a polyborazylene prepared according to any one of claims 1 to 8, and/or a polyborazylene according to any one of claims 9 to 11, as a precursor to boron nitride, especially boron nitride of the hexagonal type.

**13.** The use of a polyborazylene according to claim 12 for the production of:

- materials, especially fibers, based on boron nitride;
- coatings based on boron nitride;
- fibers and/or interphases on the surface of fibers and/or matrices,

in the context of the preparation of composite materials.

**Patentansprüche**

**1.** Verfahren zur Herstellung von mesomorphem Polyborazylen, aufweisend die Darstellung von Polyborazylen durch Polykondensation von Borazin im geschlossenen Reaktionsgefäß, **dadurch gekennzeichnet, daß** es außerdem zur gleichsam augenblicklichen Darstellung einer Mesophase die Zugabe eines Lösungsmittels, das ausgewählt ist unter den aromatischen Lösungsmitteln, Borazin-Lösungsmitteln und ihren Gemischen, zu dem durch Polykondensation erhaltenen Polyborazylen aufweist.

**2.** Verfahren nach Anspruch 1, **dadurch gekennzeichnet, daß** die Mesophase nachbehandelt wird, um das Lösungsmittel ganz oder teilweise daraus zu entfernen.

**3.** Verfahren nach Anspruch 1 oder 2, **dadurch gekennzeichnet, daß** die Polykondensation bei einer Temperatur zwischen 50 und 120°C, vorteilhafterweise bei einer Temperatur zwischen 60 und 80°C, durchgeführt wird.

**4.** Verfahren nach einem der Ansprüche 1 bis 3, **dadurch gekennzeichnet, daß** die Polykondensation unter einem Inertgas-Anfangsdruck zwischen Atmosphärendruck und 200 x $10^5$ Pa durchgeführt wird.

**5.** Verfahren nach einem der Ansprüche 1 bis 4, **dadurch gekennzeichnet, daß** das Lösungsmittel ausgewählt ist unter Borazin, Benzol, Toluol und den Xylolen.

**6.** Verfahren nach einem der Ansprüche 1 bis 5, **dadurch gekennzeichnet, daß** das Lösungsmittel in einem Lösungsmittel/Polyborazylen-Massenverhältnis von kleiner als 10, vorteilhafterweise zwischen 0,2 und 5, zugegeben wird.

**7.** Verfahren nach Anspruch 6, **dadurch gekennzeichnet, daß** das Lösungsmittel in einem Lösungsmittel/Polyborazylen-Massenverhältnis von größer als 1 zugegeben wird.

**8.** Verfahren nach Anspruch 6, **dadurch gekennzeichnet, daß** das Lösungsmittel in einem Lösungsmittel/Polyborazylen-Massenverhältnis von kleiner oder gleich 1 zugegeben wird.

**9.** Mesomorphes Polyborazylen in Anwesenheit eines Lösungsmittels, das ausgewählt ist unter den aromatischen Lösungsmitteln, Borazin-Lösungsmitteln und ihren Gemischen.

**10.** Mesomorphes Polyborazylen, das bei Lichtmikroskopie einen Anisotropiegrad von größer als 50%, vorteilhafterweise größer als 80%, aufweist.

**11.** Mesomorphes Polyborazylen, das bei Lichtmikroskopie einen Anisotropiegrad nahe oder gleich 100% aufweist.

**12.** Verwendung eines gemäß einem der Ansprüche 1 bis 8 hergestellten Polyborazylens und/oder eines Polyborazylens gemäß einem der Ansprüche 9 bis 11 als Vorläufer von Bornitrid, insbesondere von Bornitrid vom hexagonalen Typ.

**13.** Verwendung eines Polyborazylens nach Anspruch 12, zur Herstellung

- von Materialien, insbesondere von Fasern, auf der Basis von Bornitrid,
- von Beschichtungen auf der Basis von Bornitrid,
- von Fasern und/oder von Zwischenphasen an der Oberfläche von Fasern und/oder von Matrizes,

im Zusammenhang mit der Herstellung von Verbundmaterialien.

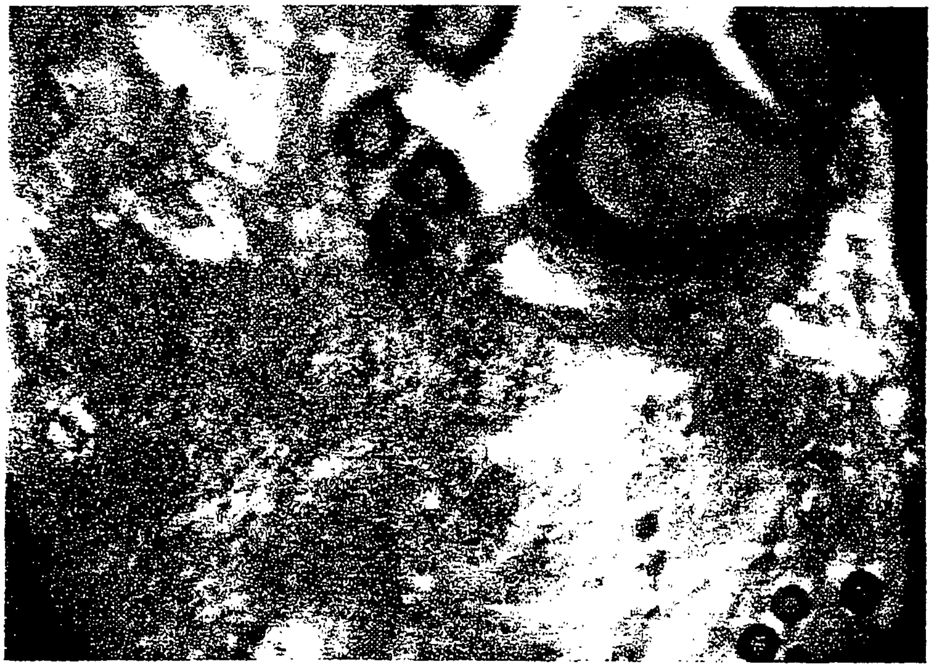

FIG.1

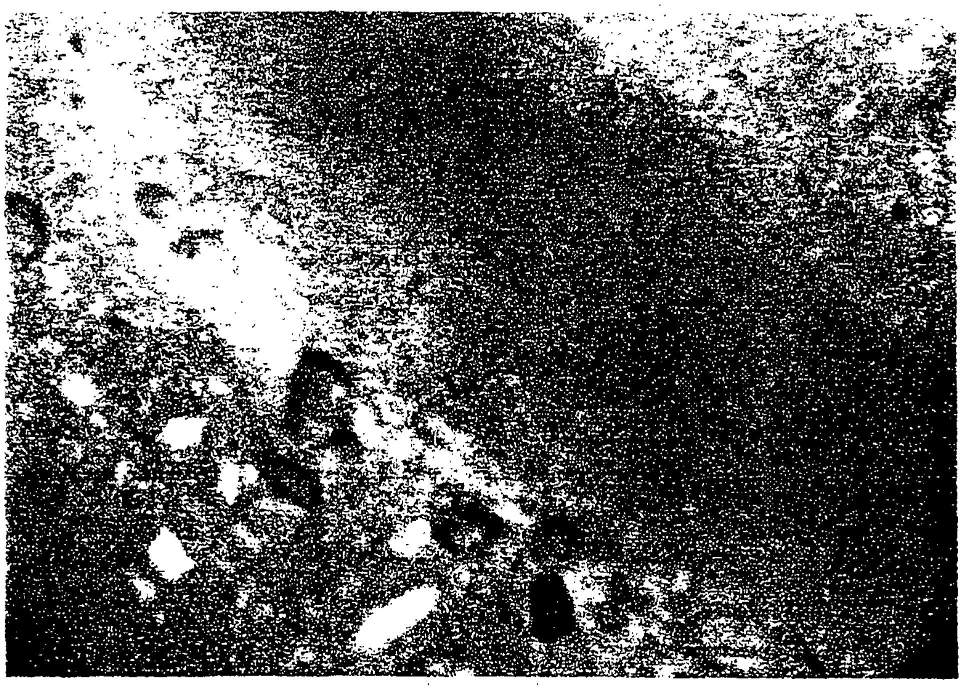

FIG.2

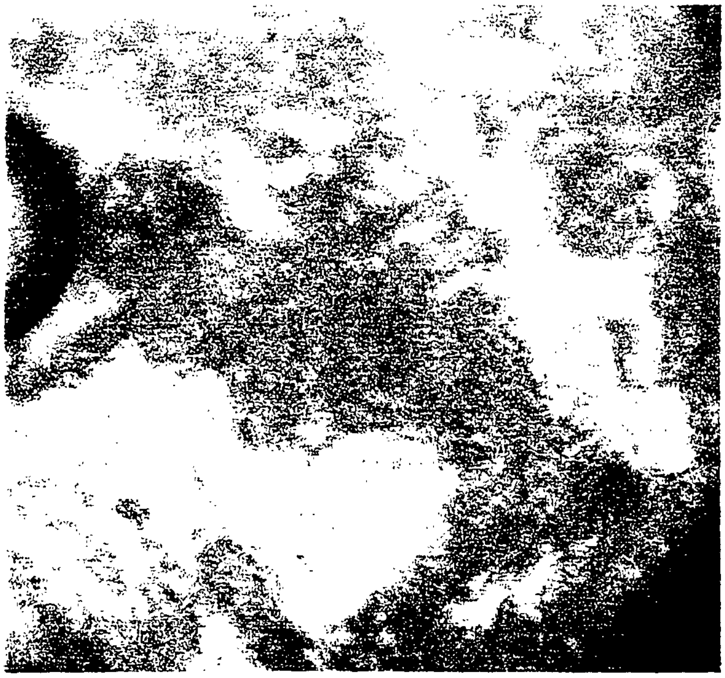

FIG.3

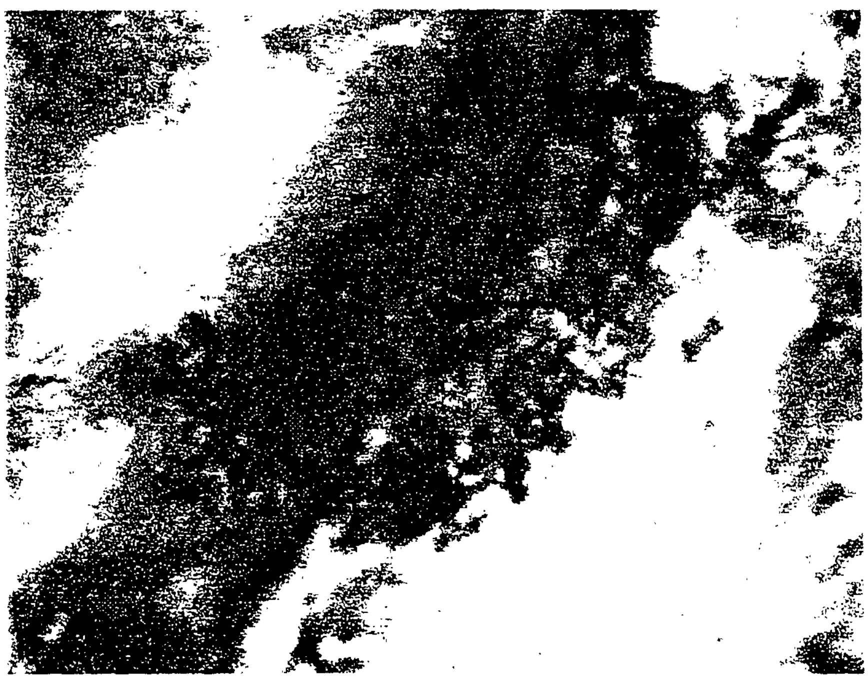

FIG.4

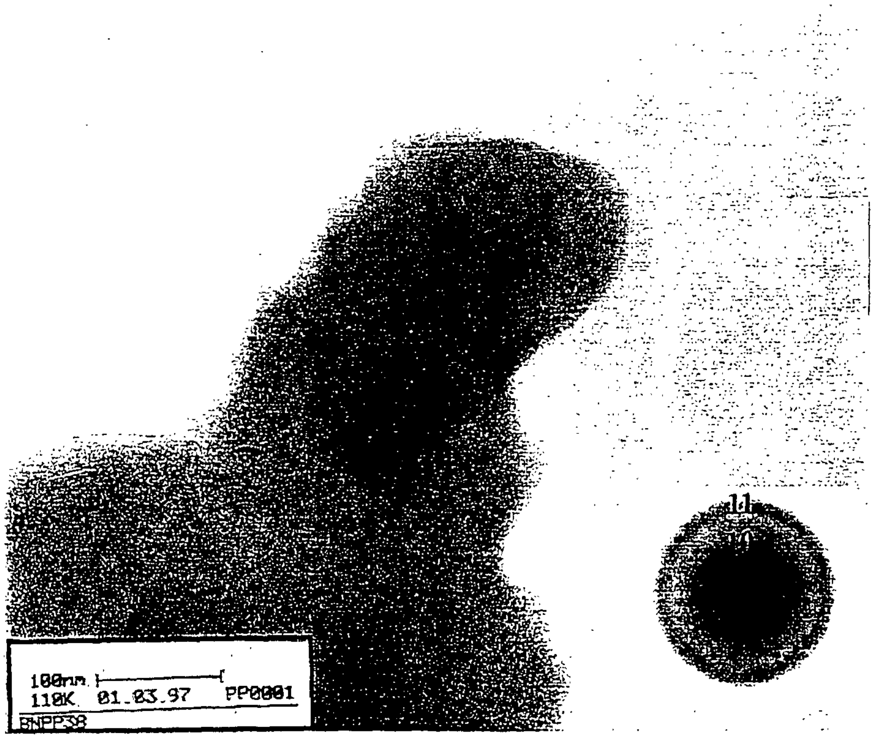
11
10
100nm
110K 01.03.97 PP0001
BNPP38

FIG.5

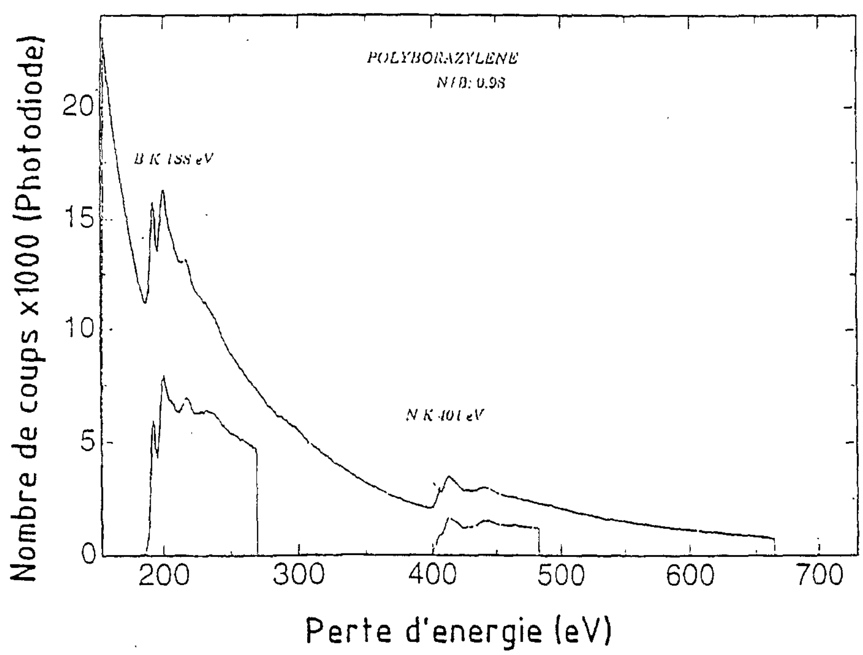
POLYBORAZYLENE
N/B: 0.98
B K 188 eV
N K 401 eV
Nombre de coups x1000 (Photodiode)
0
5
10
15
20
200
300
400
500
600
700
Perte d'energie (eV)

FIG.7

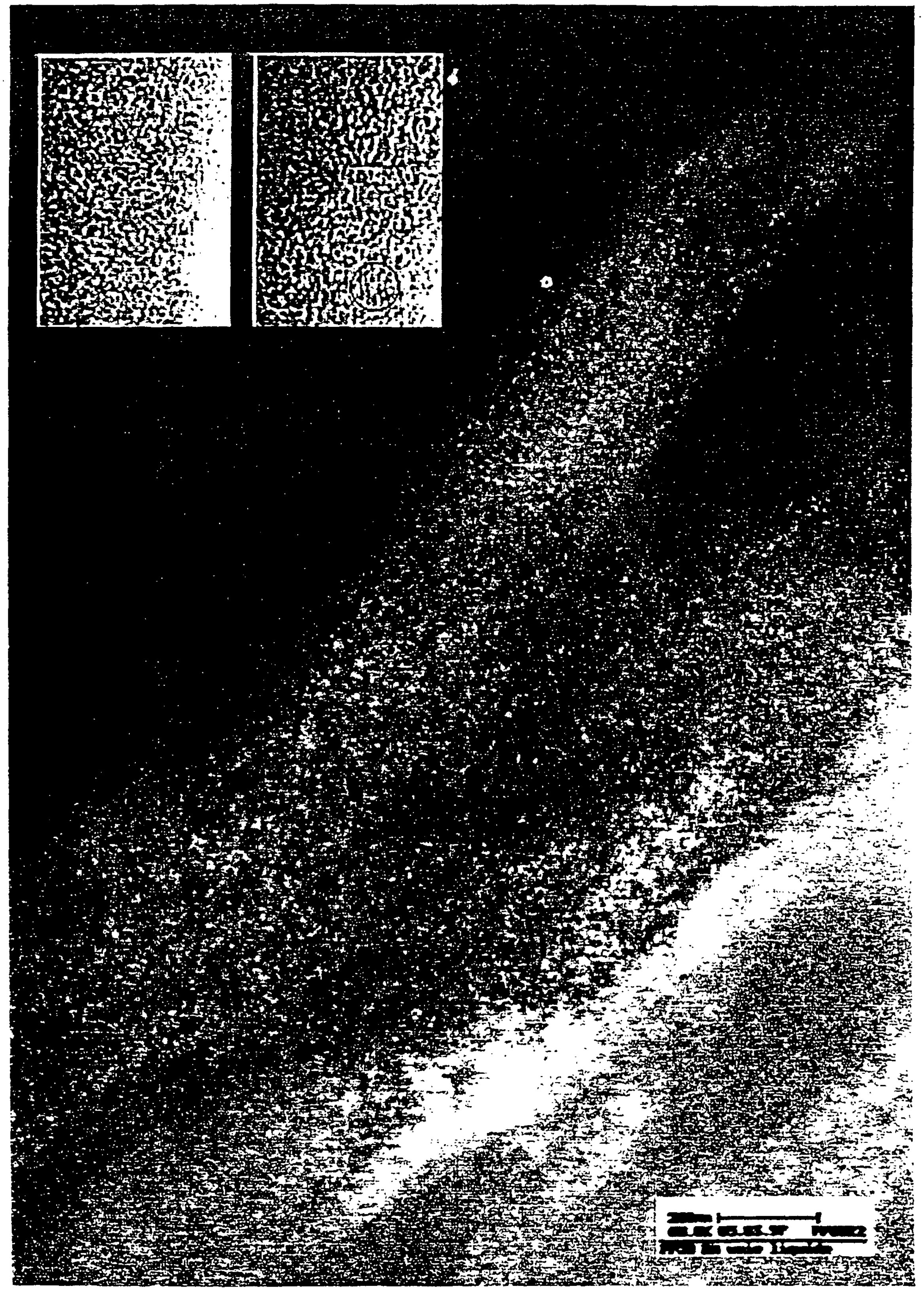

FIG.6

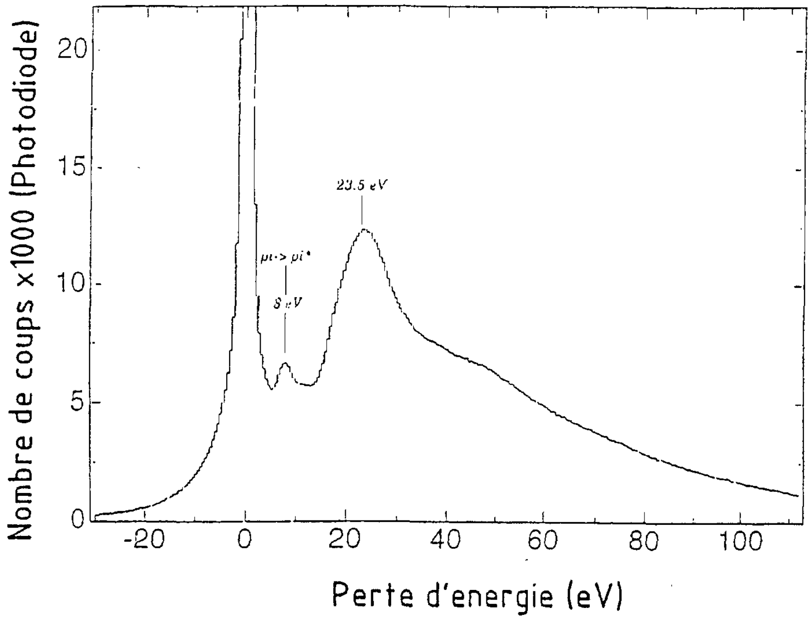
Nombre de coups x1000 (Photodiode)
0
5
10
15
20
-20
0
20
40
60
80
100
Perte d'energie (eV)
23.5 eV
8 eV

FIG.8

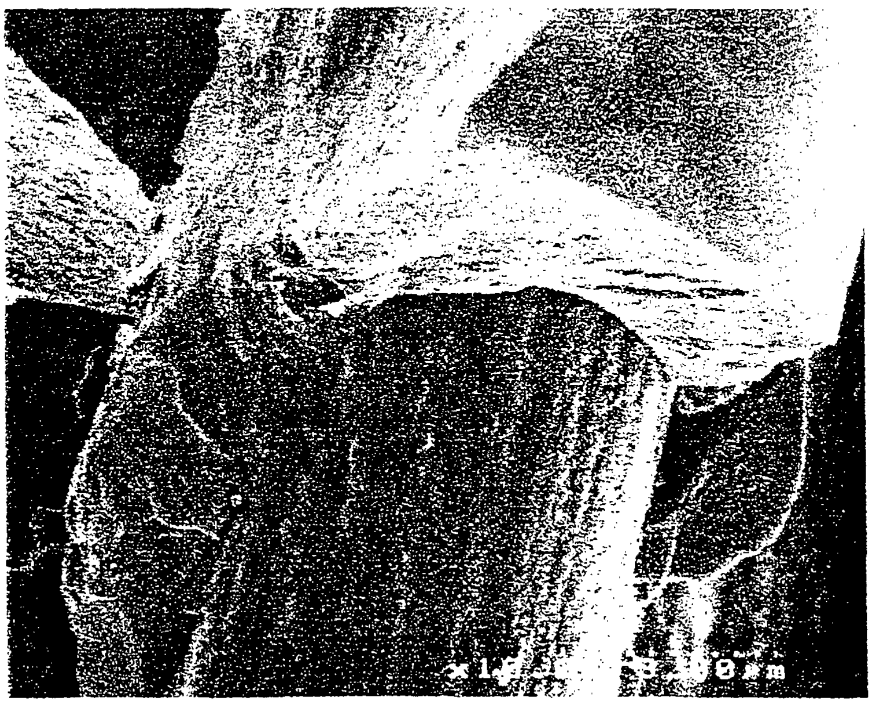

FIG.9

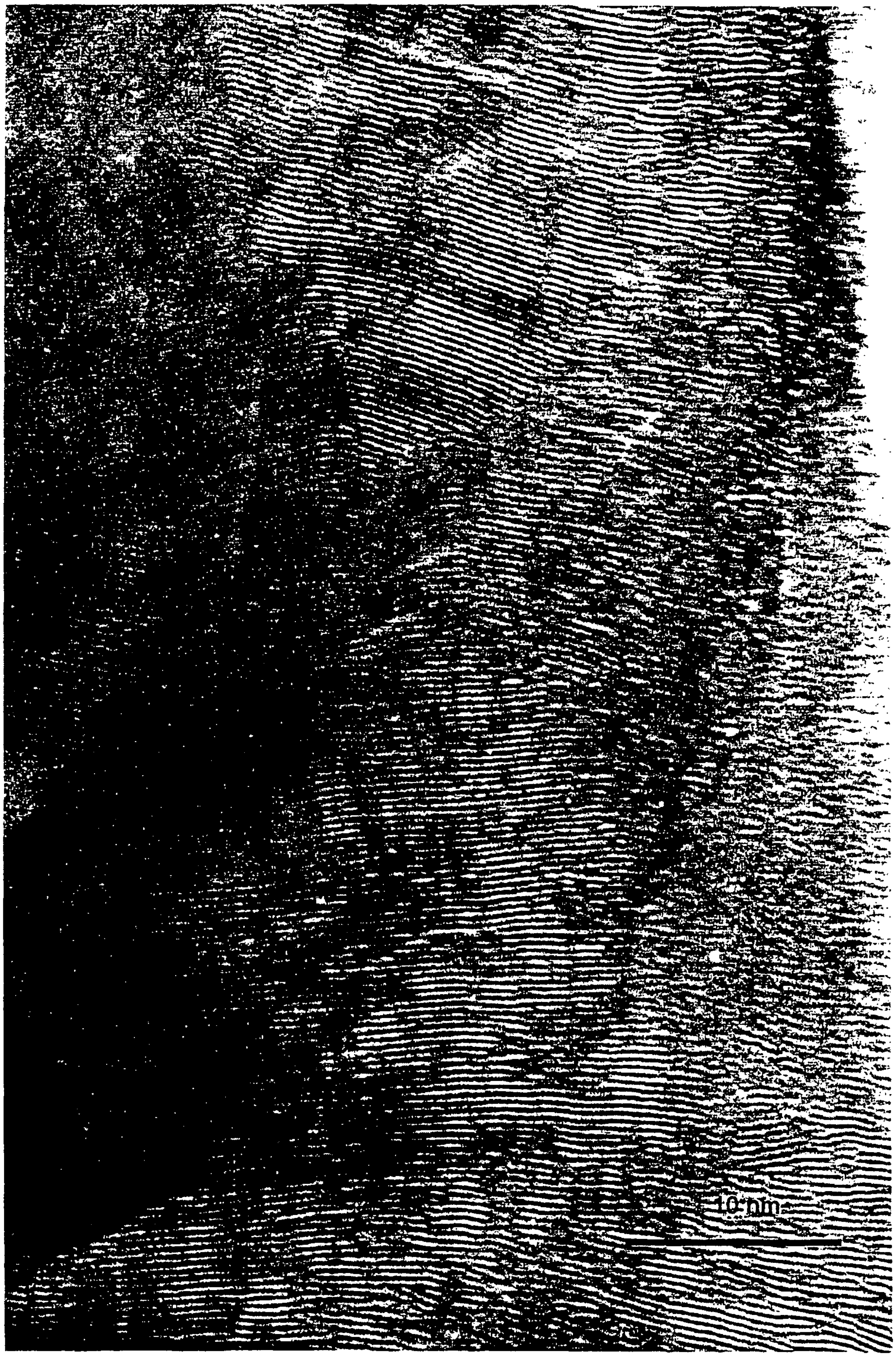


FIG.10